# EUROPÄISCHE PATENTSCHRIFT

(11) **EP 1 344 019 B1**
(45) Veröffentlichungstag und Bekanntmachung des Hinweises auf die Patenterteilung: **14.11.2012**
(21) Anmeldenummer: 01985416.5
(22) Anmeldetag: 17.12.2001
(51) Int. Cl.: G01C 3/08, G01C 15/00, G01S 7/481, G01S 7/497

(54) **Vorrichtung zur Entfernungsmessung, sowie Entfernungsmesser und Anschlagelement dafür**
Distance measuring device, rangefinder and support element therefor
Dispositif de télémétrie ainsi que télémètre et élément d'appui correspondants

(30) Priorität: 21.12.2000 CH 24932000
(43) Veröffentlichungstag der Anmeldung: 17.09.2003
(73) Patentinhaber: Leica Geosystems AG, 9435 Heerbrugg (CH)
(72) Erfinder: BÖGEL, Gerhard, CH-9436 Balgach (CH); BÖSCH, Thomas, A-6890 Lustenau (AT)
(74) Vertreter: Kaminski, Susanne
(86) Internationale Anmeldenummer: PCT/EP2001/014873
(87) Internationale Veröffentlichungsnummer: WO 2002/050564

(56) Entgegenhaltungen:
- DE-A- 19 809 683
- US-A- 3 894 805
- US-A- 6 144 308

## Beschreibung

Die Erfindung betrifft eine Vorrichtung zur Entfernungsmessung nach dem Oberbegriff des Anspruchs 1, sowie einen Entfernungsmesser für diese Vorrichtung nach dem Oberbegriff des Anspruchs 5 und ein Anschlagelement für diese Vorrichtung nach dem Oberbegriff des Anspruchs 8.

Vorrichtungen zur Entfernungsmessung mit einer Kombination aus einem Entfernungsmesser, vorzugsweise Laser-Entfernungsmesser, und einer Aufnahme zur Positionierung und zur Festlegung des Entfernungsmessers sind allgemein bekannt und finden in vielen Bereichen Verwendung. Diese Aufnahmen bewirken eine exakte Positionierung des Entfernungsmessers bezüglich eines Referenzpunktes, so dass verschiedene Messungen in ein gemeinsames Bezugssystem übertragen werden können. Darüber hinaus gewährleisten sie eine stabile Halterung während des Messvorganges.

Als Referenzpunkt soll hier ein Punkt definiert werden, der als Bezugspunkt für gemessene Distanzen dient, d.h. alle durch den Entfernungsmesser tatsächlich gemessenen Werte müssen so umgerechnet werden, dass sie den Distanzen im Bezugssystem entsprechen. Im Regelfall müssen bei einer Anlage an einen Punkt, beispielsweise an einer Mauer in einem Gebäude, also noch die Gehäuseanteile des Entfernungsmessers und eventuelle Anlageteile, die zur Positionierung des Entfernungsmessers dienen, berücksichtigt werden.

Die Halterungen des Stands der Technik sind meist als Stative ausgebildet, der Entfernungsmesser wird mittels Gewinde und Gewindebuchse befestigt, wobei im Regelfall eine Beweglichkeit um zwei Achsen (horizontal und vertikal) sichergestellt ist. Dieser Typ der Halterung findet seine Verwendung insbesondere im Bereich geodätischer Vermessungen.

Das Dokument US 6 144 308 A offenbart eine Laser-Entfernungsmessvorrichtung mit integriertem Neigungssensor, die auf einem Stativ angebracht ist. Mittels des gemessenen Neigungswinkels ist eine Korrekturberechnung der Abweichung des Referenzpunkts aus der Vertikalen möglich.

Das Dokument DE 198 09 683 A offenbart ein Anschlagelement, in das ein Entfernungsmesser mit seiner Referenzfläche so einsteckbar ist, dass diese bezüglich einer Referenzbuchse des Anschlagelements definiert positioniert werden kann.

Auch in anderen Bereichen ist es erforderlich, den Entfernungsmesser an einem Objekt oder einem Bezugspunkt definiert anzulegen, um eine genaue Messung der Distanz zu einem anderen Objekt zu ermöglichen. Insbesondere die Verwendung im Baubereich erfordert eine hohe Genauigkeit der Messung bei verschiedenartigen Oberflächen und Bezugspunkten. Beispiele für solche Messungen stellen Gebäudeabstände, Deckenhöhen oder lichte Weiten von Öffnungen dar. Aufgrund der baulichen Strukturen müssen Messungen häufig auch aus Ecken heraus durchgeführt werden, woraus besondere Anforderungen an Grösse und Handhabbarkeit des Entfernungsmessers resultieren. Durch den häufig stark strukturierten Untergrund ergeben sich Probleme mit der passgenauen Anlage und damit der Positionierung des Entfernungsmessers. Beispielsweise erschweren Löcher, Kanten, Rundungen oder Drahtgeflechte eine exakte Positionierung des Gerätes. Auch kann es von Interesse sein, Flüssigkeitsspiegel, z.B. der Wasserstand in einem Raum, vermessen zu können; allerdings ist die Vermessung von Flüssigkeitsoberflächen mit den Entfernungsmessern des Stands der Technik ohne aufwendige Hilfsmittel nicht möglich.

Die Hauptanforderung an die Halterung liegt somit in der Positionierung des Entfernungsmessers bezüglich eines Punktes oder in einer Ebene, durch die verschiedenen Messungen in ein einheitliches Bezugssystem übertragen werden können. Darüber hinaus wird durch eine mechanisch feste Fixierung die erzielbare Genauigkeit während des Messvorganges gesteigert.

Als Hauptschwierigkeiten ergeben sich hierbei die definierte Anlage an den zu vermessenden Referenzpunkt und die mechanisch hinreichend stabile Fixierung des Gerätes während der Messung am Objekt. Eine definierte Anlage ist insbesondere bei schwer zugänglichen Punkten, wie z.B. in verwinkelten Oberflächen, oder bei Objekten mit unvorteilhaften Oberfläche, wie z.B. sehr weichen oder gekrümmten Oberflächen, nur schwer zu realisieren. Neben der Erreichbarkeit des Messpunktes, die z.B. durch einen einfachen, ausklappbaren Dorn gewährleistet werden kann, besteht das Erfordernis der sicheren Fixierung des Messgerätes während der Messung. Hierfür notwendige Hilfsmittel bedingen häufig eine Abweichung von der idealen Anlage an den Messpunkt. Der Entfernungsmesser muss mit Hilfe einer Aufnahme oder einer unterstützenden Konstruktion positioniert werden. Kann der Entfernungsmesser damit nicht direkt an den eigentlich zu vermessenden Punkt angelegt werden, muss zumindest die Entfernung vom tatsächlichen Messort zu diesem Punkt bekannt sein.

Wird bei der Anlage ein Messanschlag verwendet, wie er auch aus anderen Bereichen der Messtechnik als bekannt vorausgesetzt werden kann, so muss diese, durch den Messanschlag bewirkte zusätzliche Distanz zum Messpunkt bei der Messung berücksichtigt werden.

Die Realisierung eines derartigen Mess-Systems unterliegt verschiedenen Spezifikationen. Die Anforderungen an das Messgerät bestehen in einer guten Handhabbarkeit, der notwendigen Präzision und einer geringen Grösse, die es ermöglicht, alle relevanten Bereiche zu erreichen und zu vermessen.

Die hierfür verwendeten, meist handgehaltenen, Laser-Entfernungsmesser sind weit verbreitet. Ein Gerät diesen Typus wird beispielsweise in EP 0 738 899 B1 beschrieben.

Als problematisch stellt sich meist die exakte Positionierung des Entfernungsmessers am zu messenden Objekt dar. So erfordert beispielsweise die Messung einer Entfernung zwischen einer glatten Wand und einem Rohr die Anlage eines Entfernungsmessers an eine gekrümmte Fläche, wenn der Vorteil der Wand als ebene Reflexionsfläche beibehalten werden soll.

Die technische Aufgabe der vorliegenden Erfindung besteht in der Bereitstellung einer Vorrichtung und deren Bestandteilen Entfernungsmesser und Anschlagelement, die eine definierte und hinreichend fixierte Anlage des Entfernungsmessers an nahezu beliebig geformten Oberflächen gewährleisten.

Diese Aufgabe wird erfindungsgemäss durch die kennzeichnenden Merkmale der Ansprüche 1, 5 bzw. 7 gelöst. Vorteilhafte und alternative Ausgestaltungen und Weiterbildungen der Vorrichtung ergeben sich aus den Merkmalen der Unteransprüche.

Beim Erfindungsgegenstand wird an einem - vorzugsweise handgehaltenen - Entfernungsmesser ein auswechselbares Anschlagelement angebracht, dessen dem Objekt, von dem aus gemessen werden soll, zugewandte Seite diesem weitgehend angepasst werden kann. Damit kann sowohl eine exakte Positionierung gegenüber dem zu vermessenden Referenzpunkt als auch eine feste Auflage auf der Oberfläche erreicht werden.

Das durch die Positionierung des Messgerätes bedingte Auseinanderfallen von Mess- und Referenzpunkt bedingt eine Korrektur der vom Entfernungsmesser angegebenen Distanz. Diese Korrektur kann durch einen integrierten Rechner automatisch berechnet werden, wenn die erforderlichen Masse des Anschlagelementes als Korrektur-Daten exakt bekannt sind.

Grundsätzlich besteht darüber hinaus die Möglichkeit, in einer alternativen Realisierung auf einen integrierten Rechner zu verzichten und die erforderliche Korrektur anhand der angegebenen Daten des Anschlagelementes extern zu berechnen.

Auch kann durch die erfindungsgemässe Vorrichtung grundsätzlich mit einer einzigen Messung die Distanz zu mehreren Referenzpunkten gleichzeitig berechnet werden.

Die weitgehend frei gestaltbare Objektseite des Anschlagelementes erlaubt eine Bereitstellung von Anschlagelementen für alle Formen und Oberflächen. Selbst die Verwendung eines Schwimmers als Anschlagelement für die Vermessung der Distanz von Flüssigkeitsoberflächen zu Bezugsobjekten ist realisierbar.

Eine besonders handhabungsfreundliche Ausführung stellt ein Anschlagelement mit einer verstellbaren und universell einsetzbaren Anlage dar. Diese kann beispielsweise als Teleskoparm ausgebildet werden, der nach seiner Anlage an das zu vermessende Objekt automatisch seine Länge misst und diesen Wert zur Berechnung der Korrektur automatisch übermittelt.

Eine weitere vorteilhafte Einsatzmöglichkeit bietet die Berechnung von Distanzen zu grundsätzlich nicht zugänglichen Punkten, wie z.B. Rohrachsen. Eine durchmesserspezifische Manschette als Anschlagelement erlaubt die Anbringung des Messgerätes an einem Rohr. Der Messwert kann dann direkt so korrigiert werden, dass die Entfernung zur Rohrmitte ausgegeben wird. Durch diese Vorgehensweise wird insbesondere bei grösseren Messserien der Rechen- und Zeitaufwand deutlich reduziert. Dabei kann die Manschette wie im obigen Beispiel des Teleskoparmes verstellbar ausgelegt werden.

Eine weitere vorteilhafte Einsatzmöglichkeit des auswechselbaren Anschlagelements ist dessen Verwendung als Anschlagelement zu einer Aufnahme, die als Anlagepunkt für Messungen dient. In geodätischen Anwendungen wird hierbei meist ein Dreibein-Sativ als Halterung und Aufnahme des Entfernungsmessers eingesetzt. Der aufgesetzte Entfernungsmesser ist hierbei um eine vertikale Achse drehbar gelagert, so dass durch die Bewegung um diese Achse eine Ebene aufgespannt wird, die meist durch Verstellmöglichkeiten im Dreibein-Stativ nivellierbar gestaltet ist.

Für Vermessungen von zwei oder mehr Punkten, die ausserhalb dieser horizontalen Drehebene des Entfernungsmessers bezüglich der Aufnahme liegen, muss der Entfernungsmesser um eine horizontale Achse geschwenkt werden. Durch eine Messung von zwei übereinanderliegenden Punkten kann prinzipiell deren Höhendifferenz bestimmt werden.

Der gegenwärtige Stand der Technik zur Aufnahme von Laser-Entfernungsmessern besteht in einer zur Emissionsachse des Entfernungsmessers senkrechten Gewindebüchse, in die eine Schraube der Stativhalterung greift. Messgerät und Stativ werden auf diese Weise so miteinander verbunden, dass der Entfernungsmesser um eine durch diese Verbindung laufende und zu dieser senkrecht orientierte Achse drehbar gelagert ist.

Da bei Halterungen dieser Bauart die Drehachse und die Achse der Laseremission bzw. der Laser-Detektion keinen gemeinsamen Schnittpunkt besitzen, kommt es beim Schwenken zu differierenden Positionierungen zwischen den Bezugspunkten von Entfernungsmesser und Stativ, die für hochgenaue Messungen rechnerisch kompensiert werden müssen.

Die technische Aufgabe besteht in der Bereitstellung einer Vorrichtung, die es erlaubt, einen Entfernungsmesser auf einer Halterung - vorzugsweise ein Stativ - um eine horizontale und eine vertikale Achse drehbar so zu montieren, dass keine durch die Schwenkbewegung verursachten Korrekturen der gemessenen Distanzen notwendig werden.

Diese Aufgabe wird erfindungsgemäss durch die kennzeichnenden Merkmale des Anspruchs 12 gelöst. Vorteilhafte Ausgestaltungen und Weiterbildungen der Vorrichtung ergeben sich aus den Merkmalen der Unteransprüche. Beim Erfindungsgegenstand wird aus einem - vorzugsweise handgehaltenen - Entfernungsmesser und einem - vorzugsweise auswechselbaren - Anschlagelement eine Vorrichtung zur Entfernungsmessung gebildet, die an einer Aufnahme befestigt ist. Dabei wird das Anschlagelement so am Entfernungsmesser angebracht, dass eine mechanisch stabile und bezüglich der Aufnahme um mindestens eine Achse schwenkbare Verbindung zwischen Entfernungsmesser und Aufnahme gewährleistet ist.

Dieses Anschlagelement bewirkt erfindungsgemäss eine Positionierung des Entfernungsmessers bezüglich der Aufnahme so, dass der Schnittpunkt aller Drehachsen des Entfernungsmessers bezüglich der Aufnahme auf einer oder zwischen mehreren Achsen von zur Distanzmessung verwendeten Strahlgängen liegt.

Schneiden sich Drehachsen und zur Distanzmessung verwendeten Achsen in einem Punkt, kann dieser als Referenzpunkt der Entfernungsmessung verwendet werden und eine Korrektur kann entfallen. Liegt der Schnittpunkt aller Drehachsen zwischen mehreren Achsen von zur Distanzmessung verwendeten Strahlgängen, treten zwar grundsätzlich noch geringfügige Abweichungen durch Schwenkbewegungen auf, diese können aber bei hinreichend nahe beieinander liegenden Strahlgängen vernachlässigt werden.

Eine mögliche, beispielhafte Realisierung eines erfindungsgemässen Anschlagelementes stellt die Anbringung eines geraden Anschlagelementes an der der Laser-Emission gegenüberliegenden Seite eines handelsüblichen, handgehaltenen Laser-Entfernungsmessers dar. Das Anschlagelement wird an einem Stativ mittels Gewinde und Gewindebuchse so angebracht, dass eine am Anschlagelement angebrachte Achse - beispielsweise ein Scharnier - in der Achse des zur Entfernungsmessung verwendeten Strahlgangs liegt.

Die Hauptanforderung an das Anschlagelement liegt somit in der Positionierung des Entfernungsmessers bezüglich einer oder mehrerer Drehachsen, die grundsätzlich am Anschlagelement oder der Aufnahme angebracht sein können.

Als Schwierigkeit ergibt sich hierbei die definierte Anlage an den durch den Schnittpunkt der Achsen definierten Referenzpunkt. Da der Entfernungsmesser aufgrund des Anschlagelementes nicht direkt an den Referenzpunkt angelegt werden kann, muss die durch das Anschlagelement bewirkte zusätzliche Distanz zum diesem Punkt bekannt sein.

Die zur Berechnung erforderliche Elektronik kann grundsätzlich als analoge Schaltung oder als digitaler Rechner in die Vorrichtung implementiert werden. Eine Korrektur kann dann durch eine Modifikation der Schaltung oder kalkulatorisch durch die Verwendung von Korrektur-Daten im digitalen Rechner erfolgen. Dabei können die Korrektur-Daten grundsätzlich zu Beginn eines Messvorganges abgefragt und manuell eingegeben oder automatisch eingelesen werden und nach einer Zwischenspeicherung im Rechner stets neu für Berechnungen verwendet werden.

Realisierbar ist jedoch auch eine ständige Abfrage bei jeder neu erforderlichen Berechnung. Als eine besonders vorteilhafte, da anwenderfreundliche, Ausgestaltung stellt sich eine automatische Identifikation des Anschlagelementes mit Einlesen der Korrektur-Daten dar.

Verfügt die Vorrichtung erfindungsgemäss über die Mittel zur Berechnung der Korrektur, kann entweder direkt der korrigierte Wert oder die erforderliche Korrekturdistanz angegeben werden. Besitzt das Anschlagelement eine automatisch detektierbare Kennung, so erkennt der Entfernungsmesser das jeweils angebrachte Element und kann die Korrektur ohne zusätzliche Eingaben nach Anlegen an das Objekt eigenständig berechnen. Die erforderlichen Daten des Anschlagelementes können dabei in diesem selber oder im Entfernungsmesser gespeichert werden. Auch können die Mittel zur Berechnung der korrigierten Entfernung bzw. der notwendigen Korrekturdistanz grundsätzlich sowohl im Entfernungsmesser als auch im Anschlagelement oder in beiden Teilen gemeinsam untergebracht werden.

Der Ort von Datenspeicherung und Berechnung der Korrektur ist von der genauen Auslegung der Vorrichtung abhängig. So ist ein standardisierter Entfernungsmesser realisierbar, an dem komplexe, mehrfach verstellbare Anschlagelemente angebracht werden können, die von verschiedensten Herstellern, teilweise ausschliesslich für hochspezialisierte Anwendungen, angeboten werden. Für diese Konstellation bietet eine Berechnung im Anschlagelement den Vorteil, alle notwendigen und herstellerspezifischen Daten ausschliesslich im auswechselbaren Anschlagelement speichern zu können und lediglich die gemessene Entfernung vom vergleichsweise standardisierten Messgerät zu beziehen. Nachteilig wirkt sich diese Lösung allerdings auf die Komplexität des Anschlagelementes aus.

Die andere Möglichkeit, eine Berechnung im Entfernungsmesser, bietet den Vorteil der einfachen, preiswerten Anschlagelemente, bedingt aber eine Speicherung der typspezifischen Daten im Entfernungsmesser oder aber die Speicherung im Anschlagelement und die Übertragung zum Messgerät. Allerdings bietet diese Lösung Vorteile, wenn mit einem Anschlagelement mit verstellbaren Komponenten gearbeitet werden soll, da dann auf jeden Fall die stets aktuellen Einstell- bzw. Korrekturwerte übertragen werden müssen.

Die Identifikation des Anschlagelementes kann grundsätzlich auf verschiedene Weise erfolgen, wobei sowohl eine reine Erkennung des Anschlagelementes ohne Speicherung von Informationen als auch eine Übertragung von im intelligent gestalteten Anschlagelement gespeicherten Daten realisiert werden können.

Beispielsweise kann der jeweilige Typ des Anschlagelementes an der Ausgestaltung einer Steckverbindung rein mechanisch und ohne Datenspeicherung in diesem Element erkannt werden. Die Kennung könnte hier z.B. durch einen speziellen Stecker in einer Komponente und den Positionen einer Vielzahl von Stiften in der jeweils anderen Komponente erfolgen, das Vorhandensein oder Fehlen von Stiften auf ihren Positionen gewährleistet eine binäre Kodierung.

Eine weitere Möglichkeit stellt die Anbringung von Magneten dar, aus deren Position auf den Typ des Anschlagelementes geschlossen werden kann. Die Detektion der Magnete kann beispielsweise unter Verwendung des Hall-Effektes erfolgen.

Dagegen erlauben beispielsweise elektronische Varianten die Verwendung von integrierten Schaltkreisen und Speicherbausteinen, auf denen eine grössere Anzahl von Daten im Anschlagelement gespeichert und bei Bedarf durch das Messgerät ausgelesen werden können. Gleiches gilt für optische oder elektromagnetische Speichermedien, z.B. Magnetstreifen. Die Übertragung der Daten kann beispielsweise über elektrische Kontakte oder über elektromagnetische Strahlung, z.B. mittels eines Schwingkreises, erfolgen. Die letztgenannte Möglichkeit bietet den Vorteil, das Anschlagelement ohne. äussere Kontakte ausführen zu können, wodurch ein dichter Abschluss von Entfernungsmesser und Anschlagelement, einfach zu realisieren ist, so dass der Einfluss äusserer Bedingungen, wie z.B. harte physische Umgebungsbedingungen durch Feuchtigkeit oder Staub, auf den Einsatz des Gerätes vermindert wird.

Es ist das Ziel der erfindungsgemässen Vorrichtung, bei gleichbleibender oder verbesserter Präzision der Distanzmessungen eine deutlich verbesserte Handhabung und verringerten Zeitbedarf zu erreichen.

Die erfindungsgemässe Vorrichtung wird nachfolgend anhand von in der Zeichnung schematisch dargestellten Ausführungsbeispielen rein beispielhaft näher beschrieben. Im einzelnen zeigen
- Fig. 1: eine Gesamtdarstellung einer Vorrichtung aus Entfernungsmesser mit zwei auswechselbaren Anschlagelementen,
- Fig. 2: eine beispielhafte Anwendung der Vorrichtung mit einem speziell ausgeformten Anschlagelement, das z.B. die Anlage an einem Rohr ermöglicht,
- Fig. 3: eine Möglichkeit der Identifizierung verschiedener Anschlagelemente durch Magnete und Hall-Elemente,
- Fig. 4: eine weitere Möglichkeit der Identifizierung verschiedener Anschlagelemente durch elektronische Speicherchips.
- Fig. 5: eine Gesamtdarstellung einer erfindungsgemässen Vorrichtung aus Entfernungsmesser und Anschlagelement zur Verbindung mit einer Aufnahme,
- Fig. 6: die Bewegungsmöglichkeiten des Gesamtsystems aus der Vorrichtung und einer beispielhaft dargestellten Stativ-Halterung als Aufnahme,
- Fig. 7: die Funktion und die herrschenden geometrischen Verhältnisse der erfindungsgemässen Vorrichtung mit einem Anschlagelement zur Verbindung mit einer Aufnahme bei einer vertikalen Differenz von Messpunkten,
- Fig. 8: die Funktion und die herrschenden geometrischen Verhältnisse einer vergleichbaren Vorrichtung des Stands der Technik bei einer vertikalen Differenz von Messpunkten,
- Fig. 9: die unterschiedlichen geometrischen Verhältnisse bei einer erfindungsgemässen Vorrichtung mit einem Anschlagelement zur Verbindung mit einer Aufnahme und bei einer Vorrichtung des Stands der Technik.

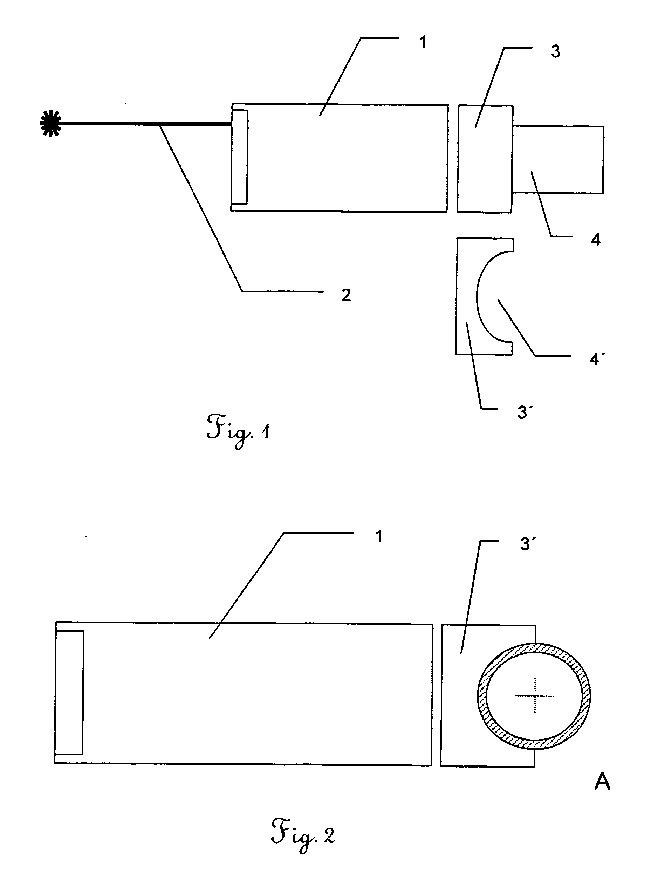

In Fig. 1 wird die Möglichkeit der Anbringung eines ersten Anschlagelements 3 und eines zweiten Anschlagelementes 3' an einen Entfernungsmesser 1 dargestellt. Die auswechselbare Anbringung erfolgt hier beispielhaft auf der der Emission eines Laserstrahls 2 entgegengesetzten Seite, die Anbringung an einem anderen Ort des Entfernungsmessers 1 ist hiermit jedoch nicht ausgeschlossen. Das erste Anschlagelements 3 und das zweite Anschlagelementes 3' sind für unterschiedliche Oberflächen optimiert. Beispielhaft werden hier ein erstes Anschlagelement 3 mit einem Anlagedorn 4 für die Anlage in Löchern oder Winkeln und ein zweites Anschlagelement 3' mit einer gewölbten Ausnehmung 4' für die Anlage an Rohren oder anderen sphärisch geformten Körper dargestellt. Eine verstellbare Ausgestaltung der gewölbten Ausnehmung 4' ermöglicht eine Anlage an Oberflächen mit verschiedenen Krümmungsradien.

Fig. 2 zeigt beispielhaft die Verwendung des zweiten Anschlagelementes 3' für eine definierte Anlage der erfindungsgemässen Vorrichtung an einer gekrümmten Anlagefläche, z.B. einem Rohr A. Durch eine mechanisch feste Verbindung der beiden Vorrichtungsbestandteile Entfernungsmesser 1 und zweites Anschlagelement 3' kann eine definierte Positionierung des Entfernungsmessers 1 gegenüber dem Rohr A erreicht werden.

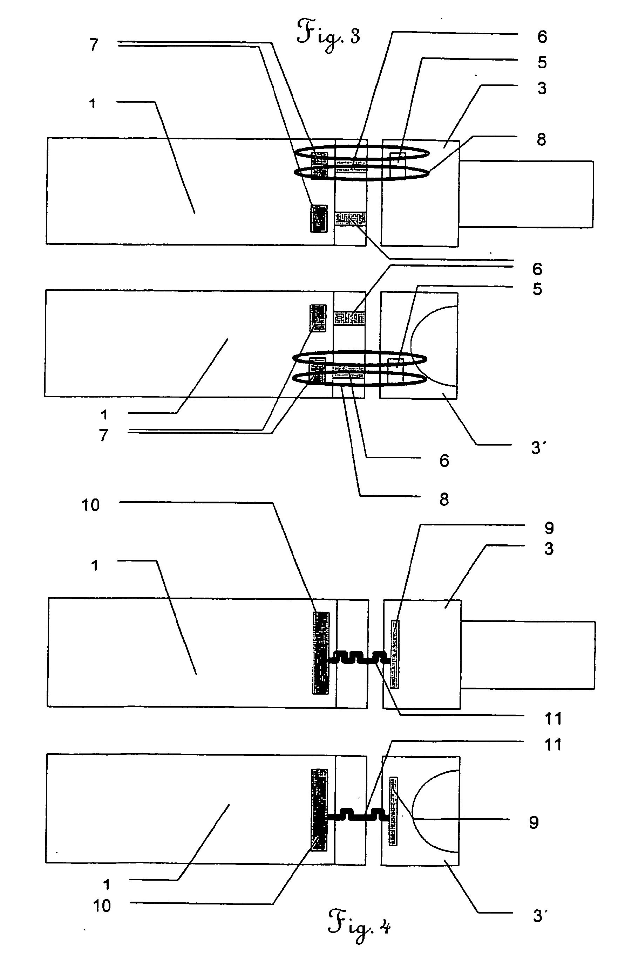

Die Identifizierung des ersten Anschlagelementes 3 oder zweiten Anschlagelementes 3' durch den Entfernungsmesser 1 kann beispielsweise durch die in Fig. 3 dargestellte Verwendung von Magneten 5 und Hall-Elementen 7 erfolgen. In dem ersten Anschlagelement 3 oder zweiten Anschlagelement 3' werden an unterschiedlichen und für das jeweilige Anschlagelement eindeutigen Positionen Magnete 5 angebracht. Deren Magnetfeld wird durch Magnetfeldleiter 6 im Entfernungsmesser 1 für die Hall-Elemente 7 detektierbar gemacht. Im gezeigten Beispiel erkennt jeweils nur eines der beiden Hall-Elemente 7 ein Magnetfeld, das von dem für das erste Anschlagelementes 3 bzw. zweite Anschlagelementes 3' spezifisch angebrachten Magneten 5 erzeugt wird. Somit wird eine eindeutige Identifizierung des ersten Anschlagelementes 3 oder zweiten Anschlagelementes 3' allein durch die Feststellung des Signals eines der beiden Hall-Elemente 7 möglich.

Eine andere Möglichkeit stellt die in Fig. 4 gezeigte Identifizierung mittels Speicherbausteinen 8 dar. Im ersten Anschlagelement 3 und zweiten Anschlagelement 3' befindet sich jeweils ein, beispielsweise elektronischer, Speicherbaustein 8, in dem die für das erste Anschlagelement 3 und zweite Anschlagelementes 3' spezifischen Daten gespeichert sind. Diese Daten können als elektromagnetisches Signal 11 übertragen und von einer in diesem Beispiel im Entfernungsmesser 1 befindlichen Elektronik 9 empfangen und weiterverarbeitet werden.

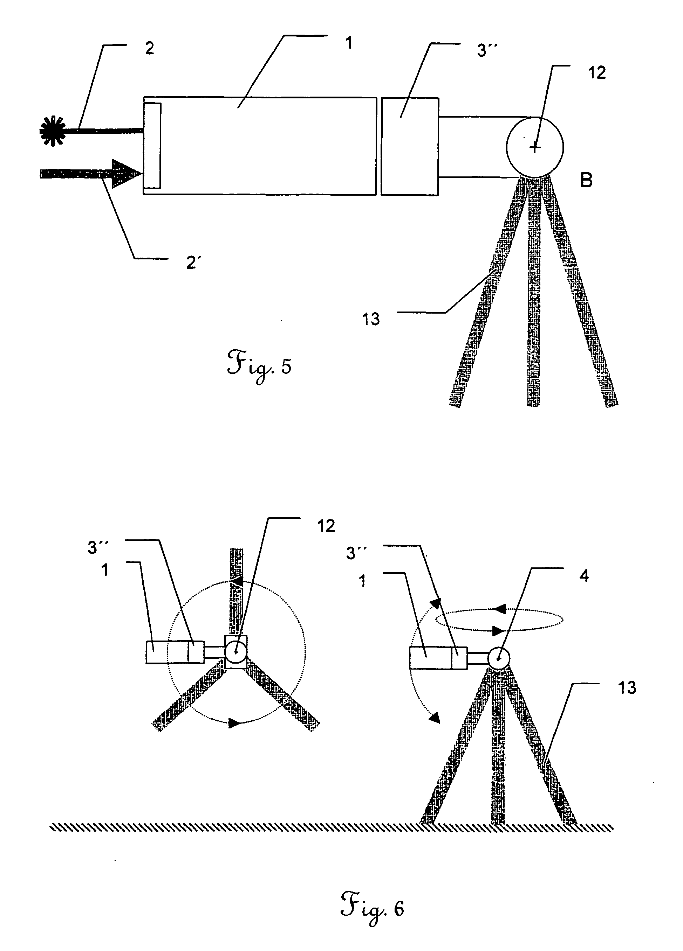

Fig. 5 zeigt schematisch eine erfindungsgemässe Vorrichtung mit der Verwendung eines Anschlagelementes als Anschlagelement, bestehend aus einem Laser-Entfernungsmesser 1, der auf seiner dem Laserstrahl 2 entgegengesetzten Seite an einem auswechselbaren Anschlagelement 3'' befestigt wird, und einem, hier beispielhaft als Dreibein ausgebildeten, Stativ. Die Verbindung zwischen Laser-Entfernungsmesser 1 und Stativ-Halterung 13 erfolgt über das im Schnittpunkt B einer horizontalen 12 und vertikalen Achse drehbar gelagerte Anschlagelement 3''. Die Achsen des Laserstrahls 2 und des Laser-Detektors 2' sind koaxial oder liegen nahe beieinander und verlaufen durch oder in unmittelbarer Nähe des Schnittpunktes der Drehachsen.

In Fig. 6 sind die Drehmöglichkeiten der miteinander verbundenen Bestandteile Laser-Entfernungsmesser 1 und Anschlagelement 3" um eine horizontale 12 und eine vertikale Drehachse 12' dargestellt.

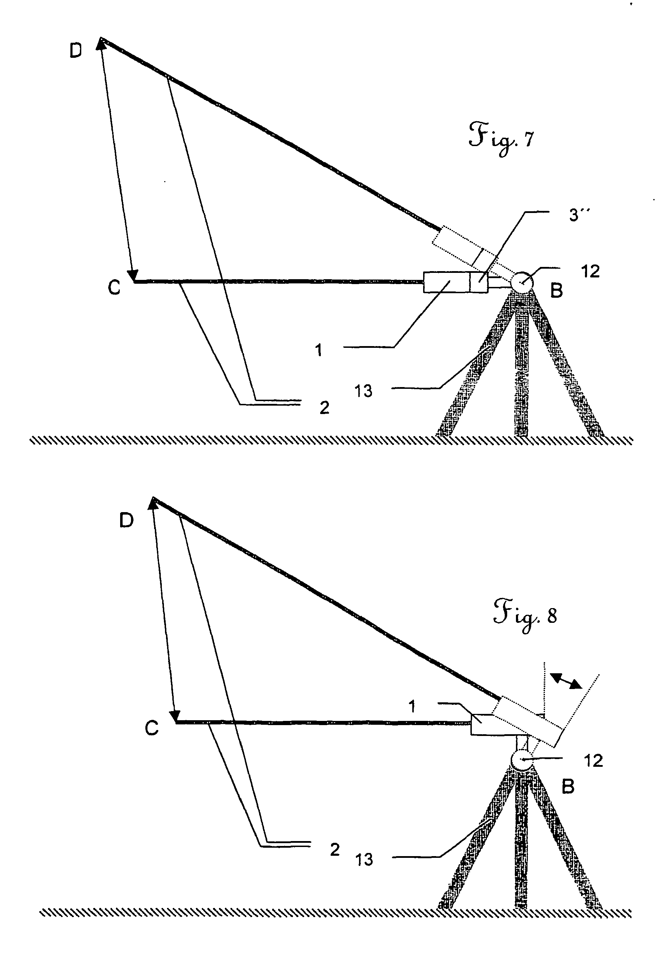

Fig. 7 zeigt die Verwendung der erfindungsgemässen Vorrichtung und einer beispielhaft dargestellten Stativ-Halterung zur Messung der Höhendifferenz zwischen einem unteren Messpunkt C und einem oberen Messpunkt D. Die aus Entfernungsmesser 1 und Anschlagelement 3" bestehende Vorrichtung ist im Schnittpunkt B der vertikalen und horizontalen Drehachse 12 mit der Stativ-Halterung 5 um die horizontale Drehachse 12 schwenkbar verbunden. Nach einer Messung der Distanz zum Messpunkt C mittels Laserstrahl 2 wird die Vorrichtung um die horizontale Drehachse 12 gedreht und die Distanz zum oberen Messpunkt D in identischer Weise vermessen. Aus der Kenntnis der beiden Distanzen und des dazwischenliegenden Winkels kann die Höhendifferenz berechnet werden.

In Fig. 8 wird die ähnliche Verfahrensweise mit einer Vorrichtung des Standes der Technik dargestellt. Die horizontale Drehachse 12 des Laser-Entfernungsmessers 1 liegt nun deutlich unterhalb der Achse des Laserstrahls 2.

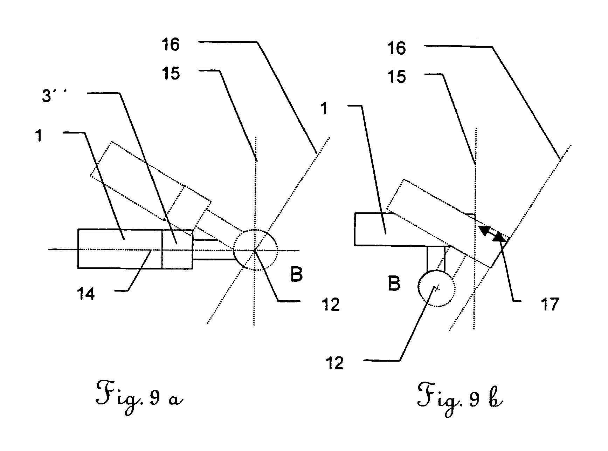

Die genauen Verhältnisse und die Unterschiede zwischen beiden Vorrichtungen werden in Fig. 9 dargestellt. In Fig. 9a treffen vertikale und horizontale Drehachse 12 im Schnittpunkt B mit der Längsachse 14 des Laser-Entfernungsmessers 1 und des Anschlagelementes 3'' zusammen. Die Längsachse 14 verlaufe hierbei parallel zu den Sichtlinien der Distanzmessungen und in deren unmittelbarer Nähe. Bei der in Fig. 9b gezeigten Vorrichtung des Stands der Technik liegt die Längsachse des Laser-Entfernungsmessers 1 ausserhalb dieses Schnittpunktes von vertikaler und horizontaler Drehachse 12. Wird nun der der Austrittsöffnung des Laserstrahls entgegengesetzte Boden des Laser-Entfernungsmessers 1 als Bezugspunkt genommen, so muss nach dem Kippen des Laser-Entfernungsmessers von der ersten Messposition 15 zur zweiten Messposition 16 für die gemessene Distanz eine Korrektur 17 berücksichtigt werden, da der Bezugspunkt sich hinsichtlich der Distanz zum Schnittpunkt B verändert hat.

### Bezugszeichenliste

- 1: Entfernungsmesser
- 2: Laserstrahl
- 2': Laser-Detektor
- 3: Erstes Anschlagelement
- 3': Zweites Anschlagelement
- 3 ": Drittes Anschlagelement
- 4: Anlagedorn
- 4': Gewölbte Ausnehmung
- 5: Magnet
- 6: Magnetfeldleiter
- 7: Hall-Element
- 8: Magnetische Feldlinien
- 9: Speicherbaustein
- 10: Elektronik
- 11: Elektromagnetisches Signal
- 12: horizontale Drehachse
- 12': vertikale Drehachse
- 13: Stativ-Halterung
- 14: Längsachse des Laser-Entfernungsmessers
- 15: Erste Messposition
- 16: Zweite Messposition
- 17: Korrektur

- A: Rohr
- B: Schnittpunkt der horizontalen und vertikalen Drehachse
- C: Unterer Messpunkt
- D: Oberer Messpunkt

## Patentansprüche

1. Vorrichtung zur Entfernungsmessung, bestehend aus einem - insbesondere handgehaltenen - Entfernungsmesser (1) und einem auswechselbaren - vorzugsweise aufsetzbaren - Anschlagelement (3; 3' ; 3''), wobei der Entfernungsmesser (1) durch das Anschlagelement (3;3';3'') bezüglich eines Referenzpunktes spezifisch positionierbar ist, **dadurch gekennzeichnet, dass**
- das Anschlagelement (3:3';3'') eine diesem Anschlagelement eindeutig zugeordnete Kennung aufweist,
- Korrekturmittel vorhanden sind, durch die bei der Entfernungsmessung eine Berücksichtigung der durch das Anschlagelement (3;3';3'') bewirkten spezifischen Positionierung bezüglich des Referenzpunktes anhand der diesem Anschlagelement eindeutig zugeordneten Kennung erfolgt,
- wobei sich diese Mittel entweder im Entfernungsmesser (1), im Anschlagelement (3;3';3'') oder in beidem befinden.

2. Vorrichtung nach Anspruch 1,
**dadurch gekennzeichnet, dass**
- durch die Korrekturmittel eine automatische Identifikation des Anschlagelements (3;3';3'') anhand der Kennung erfolgt.

3. Vorrichtung nach Anspruch 1 oder 2,
**dadurch gekennzeichnet, dass**
die Korrekturmittel Mittel beinhalten
- zur Berechnung und direkten kalkulatorischen Korrektur eines Messwertes
und/oder
- zur Berechnung und Anzeige eines bei der Messung zu berücksichtigenden Korrekturwertes,
wobei die Werte bezüglich des Referenzpunktes oder bezüglich eines oder mehrerer in Beziehung zu diesem Referenzpunkt stehender Punkte angegeben werden können und die Korrekturmittel Mittel zur Auswahl der zu berechnenden Punkte enthalten.

4. Vorrichtung nach Anspruch 2 oder 3,
**dadurch gekennzeichnet, dass**
die Kennung aus mindestens einem der folgenden, für das jeweilige Anschlagelement (3;3';3") spezifisch ausgestalteten Mittel besteht
- mechanische, vorzugsweise in Form einer Steckverbindung,
- elektronische, vorzugsweise in Form eines integrierten Schaltkreises oder Speicherbausteines (8).
- optische,
- elektromagnetische, vorzugsweise in Form eines Magnetstreifens,
- magnetische, vorzugsweise durch Anbringung von mehreren Magneten (5) und geeignet zur Messung von deren Position, beispielsweise unter Verwendung von Hall-Elementen (7).

5. Entfernungsmesser (1) für eine Vorrichtung nach einem der vorangehenden Ansprüche,
**dadurch gekennzeichnet, dass**
- des Entfernungsmesser angepasst ist für eine spezifische Positionierung bezüglich eines Referenzpunktes durch ein anhand einer dem Anschlagelement eindeutig zugeordneten Kennung identifizierbares Anschlagelement (3;3';3'') und
- der Entfernungsmesser (1) eine Vorrichtung besitzt, durch die bei der Entfernungsmessung eine Berücksichtigung der spezifischen Positionierung bezüglich des Referenzpunktes durch das Anschlagelement anhand der diesem Anschlagelement eindeutig zugeordneten Kennung erfolgt.

6. Entfernungsmesser (1) nach Anspruch 5,
**dadurch gekennzeichnet, dass**
der Entfernungsmesser (1) zur Berücksichtigung der spezifischen Positionierung
- Mittel zur kalkulatorischen Korrektur eines Messwertes
und/oder
- Mittel zur Anzeige eines bei der Messung zu berücksichtigenden Korrekturwertes beinhaltet,
wobei die Werte bezüglich des Referenzpunktes oder bezüglich eines oder mehrerer in Beziehung zu diesem Referenzpunkt stehender Punkte angegeben werden können.

7. Entfernungsmesser (1) nach Anspruch 5 oder 6,
**dadurch gekennzeichnet, dass**
der Entfernungsmesser (1) ein Laser-Entfernungsmesser ist und eine Achse seines Laserstrahls (2) und eine Achse seines Laser-Detektors (2') koaxial oder nahe beieinander liegend angeordnet sind und, dass ein Anschlagelement (3, 3', 3'') insbesondere an einer dem Laserstrahl gegenüberliegenden Seite des Entfernungsmessers (1) anbringbar ist.

8. Anschlagelement (3, 3', 3'') für eine Vorrichtung nach einem der Ansprüche 1-4,
- wobei das Anschlagelement (3, 3', 3'') an einem Entfernungsmesser (1) anbringbar ist und dazu dient, diesen Entfernungsmesser (1) bezüglich eines Referenzpunktes spezifisch zu positionieren, und
- wobei das Anschlagelement (3, 3', 3'') zwischen dem Referenzpunkt und dem Entfernungsmesser (1) exakte Distanzen definiert;
**dadurch gekennzeichnet, dass**
- das Anschlagelement (3, 3', 3'') eine diesem Anschlagelement eindeutig zugeordnete Kennung aufweist, die bei einer Entfernungsmessung mit dem Entfernungsmesser (1) identifizierbar ist und so ausgebildet ist, dass sie die Berücksichtigung der spezifischen Positionierung des Entfernungsmessers (1) bezüglich des Referenzpunktes bei der Entfernungsmessung erlaubt.

9. Anschlagelement (3, 3', 3'') nach Anspruch 8,
**dadurch gekennzeichnet, dass**
- die Kennung so ausgebildet ist, dass eine automatische Identifikation des Anschlagelements (3, 3', 3'') anhand der Kennung durch einen Entfernungsmesser (1) erfolgen kann.

10. Anschlagelement (3, 3', 3'') nach Anspruch 9,
**dadurch gekennzeichnet, dass**
die Kennung aus mindestens einem der folgenden Mittel besteht
- mechanische, vorzugsweise in Form einer Steckverbindung,
- elektronische, vorzugsweise in Form eines integrierten Schaltkreises oder Speicherbausteines (8),
- optische,
- elektromagnetische, vorzugsweise in Form eines Magnetstreifens,
- magnetische, vorzugsweise durch Anbringung von mehreren Magneten (5) und geeignet zur Messung von deren Position, beispielsweise unter Verwendung von Hall-Elementen (7).

11. Anschlagelement (3, 3', 3'') nach einem der Ansprüche 8-10,
**dadurch gekennzeichnet, dass**
- das Anschlagelement (3, 3') zwischen dessen Anlageflächen und einer Aufnahme für einen Entfernungsmesser (1) exakte Distanzen definiert.

12. Anschlagelement (3, 3', 3'') nach einem der Ansprüche 8-10
**dadurch gekennzeichnet, dass**
das Anschlagelement (3'') zur Befestigung eines Entfernungsmessers (1) auf einer Aufnahme dient und derart am Entfernungsmesser (1) anbringbar ist, dass
- eine mechanisch stabile Verbindung zwischen Entfernungsmesser (1) und der Aufnahme herstellbar ist, bei der der Entfernungsmesser (1) bezüglich der Aufnahme um mindestens eine horizontale Drehachse (12) schwenkbar ist;
- der Entfernungsmesser (1) bezüglich der Aufnahme derart positionierbar ist, dass die Drehachse (12) mit einer Achse eines zur Distanzmessung verwendeten Strahlengangs schneidet oder mit einer zwischen mehreren Achsen von zu Distanzmessung verwendeten Strahlengängen parallel verlaufenden Achse schneidet, wobei sich der Strahlengang bzw. die Strahlengänge zwischen Entfernungsmesser (1) und zu vermessendem Objekt erstrecken;
- das Anschlagelement (3'') auswechselbar gestaltet ist, und
- das Anschlagelement (3'') zwischen der Aufnahme und dem Entfernungsmesser (1), exakte Distanzen definiert.

13. Anschlagelement (3'') nach Anspruch 12, mit mindestens einer zusätzlichen vertikalen Drehachse des Entfernungsmessers (1) bezüglich der Aufnahme,
**dadurch gekennzeichnet, dass**
der Entfernungsmesser (1) mit Hilfe des Anschlagelements (3'') derart mit der Aufnahme verbind, bar ist, dass
- der Schnittpunkt beider Drehachsen (B) auf einer Achse eines zur Distanzmessung verwendeten Strahlengangs zwischen Entfernungsmesser (1) und zu vermessendem Objekt oder zwischen mehreren Achsen von zur Distanzmessung verwendeten Strahlengängen zwischen Entfernungsmesser (1) und zu vermessendem Objekt liegt.

14. Anschlagelement (3'') nach Anspruch 12 oder 13,
**dadurch gekennzeichnet, dass**
das Anschlagelement (3") mindestens zwei verschiedene, einstellbare Zustände hinsichtlich mindestens einer der folgenden Verstellmöglichkeiten besitzt,
- Rotation um die Längsachse (14) des Anschlagelementes (3''),
- Veränderung der Länge des Anschlagelementes (3'').

15. Anschlagelement (3'') nach einem der Ansprüche 12 bis 14,
**dadurch gekennzeichnet, dass**
das Anschlagelement (3'') mindestens eine der Drehachsen aufweist.

16. Anschlagelement (3'') nach einem der Ansprüche 12 bis 15,
**dadurch gekennzeichnet, dass**
das Anschlagelement (3'') mittels Gewinde und Gewindebuchse an einer insbesondere als Stativ ausgestalteten Aufnahme anbringbar ist und eine am Anschlagelement angeordnete Drehachse in der Achse eines zur Entfernungsmessung verwendeten Strahlgangs liegt.

## Claims

1. Distance measuring device, consisting of an - in particular hand-held - rangefinder (1) and an interchangeable - preferably attachable - abutment element (3; 3'; 3''), wherein the rangefinder (1) can be positioned in a specific fashion with respect to a reference point by means of the abutment element (3; 3'; 3''),
**characterized in that**
- the abutment element (3; 3'; 3'') has an identifier uniquely associated with this abutment element,
- correction means are present, by means of which, during the distance measurement, the specific positioning with respect to the reference point caused by the abutment element (3; 3'; 3'') is taken into account on the basis of the identifier uniquely associated with this abutment element,
- wherein these means are situated in the rangefinder (1), in the abutment element (3; 3'; 3'') or in both.

2. Device according to Claim 1,
**characterized in that**
- the correction means bring about an automatic identification of the abutment element (3; 3'; 3'') on the basis of the identifier.

3. Device according to Claim 1 or 2,
**characterized in that**
the correction means contain means
- for calculating and directly arithmetically correcting a measurement value
and/or
- for calculating and displaying a correction value to be taken into account during the measurement,
wherein the values can be specified in respect of the reference point or in respect of one or more points related to this reference point and the correction means contain means for selecting the points to be calculated.

4. Device according to Claim 2 or 3,
**characterized in that**
the identifier consists of at least one of the following means, specifically designed for the respective abutment element (3; 3'; 3''):
- mechanical means, preferably in the form of a plug-in connection,
- electronic means, preferably in the form of an integrated circuit or memory chip (8),
- optical means,
- electromagnetic means, preferably in the form of a magnetic strip,
- magnetic means, preferably as a result of attaching a plurality of magnets (5) and suitable for measuring the position thereof, for example by using Hall elements (7).

5. A rangefinder (1) for a device according to any one of the preceding claims,
**characterized in that**
- the rangefinder is adapted for a specific positioning with respect to a reference point by means of an abutment element (3; 3'; 3"), which can be identified on the basis of an identifier uniquely associated with the abutment element, and
- the rangefinder (1) has a device, by means of which the specific positioning with respect to the reference point by means of the abutment element is taken into account during the distance measurement on the basis of the identifier uniquely associated with this abutment element.

6. Rangefinder (1) according to Claim 5,
**characterized in that,**
in order to take account of the specific positioning, the rangefinder (1) contains
- means for arithmetically correcting a measurement value
and/or
- means for displaying a correction value to be taken into account during the measurement,
wherein the values can be specified in respect of the reference point or in respect of one or more points related to this reference point.

7. Rangefinder (1) according to Claim 5 or 6,
**characterized in that**
the rangefinder (1) is a laser rangefinder and one axis of the laser beam (2) thereof and one axis of the laser detector (2') thereof are arranged coaxially or lying close next to one another, and **in that** an abutment element (3, 3', 3") can be attached to a side of the rangefinder (1) which, in particular, is opposite to the laser beam.

8. Abutment element (3, 3', 3'') for a device according to any one of Claims 1-4,
- wherein the abutment element (3, 3', 3'') can be attached to a rangefinder (1) and serves to position said rangefinder (1) specifically with respect to a reference point, and
- wherein the abutment element (3, 3', 3'') defines exact distances between the reference point and the rangefinder (1);
**characterized in that**
- the abutment element (3, 3', 3'') has an identifier uniquely associated with this abutment element, said identifier being identifiable during a distance measurement using the rangefinder (1) and being designed such that it allows the specific positioning of the rangefinder (1) with respect to the reference point to be taken into account during the distance measurement.

9. Abutment element (3, 3', 3'') according to Claim 8,
**characterized in that**
- the identifier is designed such that a rangefinder (1) can automatically identify the abutment element (3, 3', 3") on the basis of the identifier.

10. Abutment element (3, 3', 3'') according to Claim 9,
**characterized in that**
the identifier consists of at least one of the following means:
- mechanical means, preferably in the form of a plug-in connection,
- electronic means, preferably in the form of an integrated circuit or memory chip (8),
- optical means,
- electromagnetic means, preferably in the form of a magnetic strip,
- magnetic means, preferably as a result of attaching a plurality of magnets (5) and suitable for measuring the position thereof, for example by using Hall elements (7).

11. Abutment element (3, 3', 3'') according to any one of Claims 8-10,
**characterized in that**
- the abutment element (3, 3') defines exact distances between the contact surfaces thereof and a holder for a rangefinder (1).

12. Abutment element (3, 3', 3'') according to any one of Claims 8-10,
**characterized in that**
the abutment element (3'') serves to attach a rangefinder (1) to a holder and is able to be attached to the rangefinder (1) such that
- it is possible to establish a mechanically stable connection between rangefinder (1) and the holder, in the case of which the rangefinder (1) can be swivelled with respect to the holder about at least one horizontal axis of rotation (12);
- the rangefinder (1) can be positioned with respect to the holder such that the axis of rotation (12) intersects an axis of a beam path used for distance measurement or intersects an axis running parallel between a plurality of axes of beam paths used for distance measurement, wherein the beam path or the beam paths extend between rangefinder (1) and object to be measured;
- the abutment element (3'') is embodied in an interchangeable fashion, and
- the abutment element (3'') defines exact distances between the holder and the rangefinder (1).

13. Abutment element (3'') according to Claim 12, with at least one additional axis of rotation of the rangefinder (1) with respect to the holder,
**characterized in that**
the rangefinder (1) can be connected to the holder with the aid of the abutment element (3'') such that
- the intersection of the two axes of rotation (B) lies on one axis of a beam path used for distance measurement between rangefinder (1) and object to be measured, or between a plurality of axes of beam paths used for distance measurement between rangefinder (1) and object to be measured.

14. Abutment element (3'') according to Claim 12 or 13,
**characterized in that**
the abutment element (3'') has at least two different, adjustable states in respect of at least one of the following adjustment options:
- rotation about the longitudinal axis (14) of the abutment element (3''),
- change in length of the abutment element (3'').

15. Abutment element (3'') according to any one of Claims 12 to 14,
**characterized in that**
the abutment element (3'') has at least one of the axes of rotation.

16. Abutment element (3'') according to any one of Claims 12 to 15,
**characterized in that**
the abutment element (3'') can, by means of thread and threaded bushing, be attached to a holder, embodied as tripod in particular, and an axis of rotation arranged on the abutment element lies in the axis of a beam path used for distance measurement.

## Revendications

1. Dispositif de télémétrie composé d'un télémètre (1) - en particulier tenu à la main - et un élément de butée (3 ; 3' ; 3") remplaçable, de préférence pouvant être posé dessus, le télémètre (1) pouvant être positionné de manière spécifique par rapport à un point de référence par l'élément de butée (3 ; 3' ; 3"), **caractérisé en ce**
- **que** l'élément de butée (3 ; 3' ; 3") présente un identificateur affecté de manière univoque à cet élément de butée,
- **qu'**il existe des moyens de correction par lesquels, lors de la mesure de distance, une prise en compte du positionnement spécifique par rapport au point de référence provoqué par l'élément de butée (3 ; 3' ; 3") est effectuée à l'aide de l'identificateur affecté de manière univoque à cet élément de butée,
- cependant que ces moyens se trouvent soit dans le télémètre (1), dans l'élément de butée (3 ; 3' ; 3"), soit dans les deux.

2. Dispositif selon la revendication 1,
**caractérisé en ce**
- **qu'**une identification automatique de l'élément de butée (3 ; 3' ; 3") est effectuée par les moyens de correction à l'aide de l'identificateur.

3. Dispositif selon la revendication 1 ou 2,
**caractérisé en ce**
**que** les moyens de correction contiennent des moyens
- pour le calcul et la correction directe par le calcul d'une valeur mesurée et/ou
- pour le calcul et l'affichage d'une valeur de correction à prendre en compte lors de la mesure,
cependant que les valeurs peuvent être affichées par rapport au point de référence ou par rapport à un ou plusieurs points étant en relation avec ce point de référence et les moyens de correction contiennent des moyens pour la sélection des points à calculer.

4. Dispositif selon la revendication 2 ou 3,
**caractérisé en ce**
**que** l'identificateur est constitué par au moins l'un des moyens suivants, configurés de manière spécifique pour l'élément de butée (3 ; 3' ; 3") respectif
- mécanique, de préférence sous forme d'assemblage emboîté,
- électronique, de préférence sous forme de circuit intégré ou de composant de mémoire (8),
- optique,
- électromagnétique, de préférence sous forme de bande magnétique,
- magnétique, de préférence par fixation de plusieurs aimants (5) et approprié pour la mesure de leur position, par exemple en utilisant des éléments Hall (7).

5. Télémètre (1) pour un dispositif selon l'une des revendications précédentes, **caractérisé en ce que** le télémètre est adapté pour un positionnement spécifique par rapport à un point de référence par un élément de butée (3 ; 3' ; 3") pouvant être identifié à l'aide d'un identificateur affecté de manière univoque à l'élément de butée (3 ; 3' ; 3") et que le télémètre (1) possède un dispositif par lequel, lors de la mesure de distance, une prise en compte du positionnement spécifique par rapport au point de référence par l'élément de butée se fait à l'aide de l'identificateur affecté de manière univoque à cet élément de butée.

6. Télémètre (1) selon la revendication 5,
**caractérisé en ce**
**que** le télémètre (1) contient, pour la prise en compte du positionnement spécifique,
- des moyens pour la correction par le calcul d'une valeur mesurée et/ou
- des moyens pour l'affichage d'une valeur de correction à prendre en compte lors de la mesure,
cependant que les valeurs peuvent être affichées par rapport au point de référence ou par rapport à un ou plusieurs points étant en relation avec ce point de référence.

7. Télémètre (1) selon la revendication 5 ou 6,
**caractérisé en ce**
**que** le télémètre (1) est un télémètre laser et un axe de son rayon laser (2) et un axe de son détecteur laser (2') sont placés coaxiaux ou proches l'un de l'autre et qu'un élément de butée (3 ; 3' ; 3") peut être fixé en particulier sur un côté du télémètre (1) qui est opposé au rayon laser.

8. Elément de butée (3 ; 3' ; 3") pour un dispositif selon l'une des revendications 1 à 4,
- cependant que l'élément de butée (3 ; 3' ; 3") peut être fixé sur un télémètre (1) et sert à positionner ce télémètre (1) de manière spécifique par rapport à un point de référence et
- cependant que l'élément de butée (3 ; 3' ; 3") définit des distances exactes entre le point de référence et le télémètre (1),
**caractérisé en ce que**
- l'élément de butée (3 ; 3' ; 3") présente un identificateur affecté de manière univoque à cet élément de butée, identificateur qui peut être identifié avec le télémètre (1) lors d'une mesure de distance et qui est configuré tel qu'il permet la prise en compte du positionnement spécifique du télémètre (1) par rapport au point de référence lors de la mesure de distance.

9. Elément de butée (3 ; 3' ; 3") selon la revendication 8,
**caractérisé en ce que**
- l'identificateur est configuré tel qu'une identification automatique de l'élément de butée (3 ; 3' ; 3") peut être effectuée par un télémètre (1) à l'aide de l'identificateur.

10. Elément de butée (3 ; 3' ; 3") selon la revendication 9,
**caractérisé en ce que**
l'identificateur est constitué au moins par l'un des moyens suivants
- mécanique, de préférence sous forme d'assemblage emboîté,
- électronique, de préférence sous forme de circuit intégré ou de composant de mémoire (8),
- optique,
- électromagnétique, de préférence sous forme de bande magnétique,
- magnétique, de préférence par fixation de plusieurs aimants (5) et approprié pour la mesure de leur position, par exemple en utilisant des éléments Hall (7).

11. Elément de butée (3 ; 3' ; 3") selon l'une des revendications 8 à 10,
**caractérisé en ce que**
- l'élément de butée (3 ; 3' ; 3") définit des distances exactes entre ses surfaces de butée et un logement pour un télémètre (1).

12. Elément de butée (3 ; 3' ; 3") selon l'une des revendications 8 à 10,
**caractérisé en ce que**
l'élément de butée (3 ; 3' ; 3") sert à la fixation d'un télémètre (1) sur un logement et peut être fixé sur le télémètre (1) de telle manière
- qu'une liaison stable mécaniquement peut être établie entre le télémètre (1) et le logement pour laquelle le télémètre (1) peut pivoter par rapport au logement autour d'au moins un axe de rotation horizontal (12),
- le télémètre (1) peut être positionné par rapport au logement de telle manière que l'axe de rotation (12) coupe un axe d'une trajectoire de rayons utilisée pour la mesure de distance ou coupe un axe parallèle entre plusieurs axes de trajectoires de rayons utilisées pour la mesure de distance, cependant que la trajectoire de rayons ou les trajectoires de rayons s'étendent entre le télémètre (1) et l'objet à mesurer,
- l'élément de butée (3 ; 3' ; 3") est configuré remplaçable et
- l'élément de butée (3 ; 3' ; 3") définit des distances exactes entre le logement et le télémètre (1).

13. Elément de butée (3") selon la revendication 12 avec au moins un axe de rotation vertical supplémentaire du télémètre (1) par rapport au logement, **caractérisé en ce**
**que** le télémètre (1) peut être relié au logement à l'aide de l'élément de butée (3") de telle manière que
- le point d'intersection des deux axes de rotation (B) est situé sur un axe d'une trajectoire de rayons entre le télémètre (1) et l'objet à mesurer utilisée pour la mesure de distance ou entre plusieurs axes de trajectoires de rayons entre le télémètre (1) et l'objet à mesurer utilisées pour la mesure de distance.

14. Elément de butée (3") selon la revendication 12 ou 13,
**caractérisé en ce**
**que** l'élément de butée (3") possède au moins deux états réglables différents pour ce qui est d'au moins l'une des possibilités de réglage suivantes,
- rotation autour de l'axe longitudinal (14) de l'élément de butée (3"),
- variation de la longueur de l'élément de butée (3").

15. Elément de butée (3") selon l'une des revendications 12 à 15,
**caractérisé en ce**
**que** l'élément de butée (3") présente au moins l'un des axes de rotation.

16. Elément de butée (3") selon l'une des revendications 12 à 15,
**caractérisé en ce**
**que** l'élément de butée (3") peut être fixé par un filet et une douille filetée sur un logement configuré en particulier comme un trépied et qu'un axe de rotation placé sur l'élément de butée se trouve dans l'axe d'une trajectoire de rayons utilisée pour la mesure de distance.
